# FASCICULE DE BREVET EUROPEEN

(11) **EP 3 491 228 B1**
(45) Date de publication et mention de la délivrance du brevet: **13.10.2021**
(21) Numéro de dépôt: 17757802.8
(22) Date de dépôt: 27.07.2017
(51) Int. Cl.: F02K 1/82, B64C 1/40, F02C 7/045, G10K 11/172

(54) **PANNEAU D'ATTÉNUATION ACOUSTIQUE POUR ENSEMBLE PROPULSIF D'AÉRONEF ET ENSEMBLE PROPULSIF COMPORTANT UN TEL PANNEAU**
SCHALLDÄMPFUNGSPLATTE FÜR EINE FLUGZEUGANTRIEBSEINHEIT UND ANTRIEBSEINHEIT MIT SOLCH EINER PLATTE
ACOUSTIC ATTENUATION PANEL FOR AN AIRCRAFT PROPULSION UNIT AND PROPULSION UNIT COMPRISING SUCH A PANEL

(30) Priorité: 29.07.2016 FR 1657412
(43) Date de publication de la demande: 05.06.2019
(73) Titulaire: Safran Nacelles, 76700 Gonfreville-l'Orcher (FR); Safran Aircraft Engines, 75015 Paris (FR)
(72) Inventeur: VERSAEVEL, Marc, 76700 Gonfreville L'orcher (FR); RAMAGE, Denis, 76700 Gonfreville L'orcher (FR); CORDIER, Baptiste, 76700 Gonfreville L'orcher (FR); RIOU, Georges, 77550 Moissy Cramayel (FR); MARDJONO, Jacky, 77550 Moissy Cramayel (FR)
(74) Mandataire: Germain Maureau
(86) Numéro de dépôt international: PCT/FR2017/052116
(87) Numéro de publication internationale: WO 2018/020174

(56) Documents cités:
- EP-A1- 0 824 066
- FR-A1- 2 811 129
- FR-A1- 2 962 586
- US-A1- 2010 206 664

## Description

La présente invention se rapporte au domaine de l'atténuation acoustique dans les nacelles et dans les turboréacteurs d'aéronefs, et plus généralement dans les ensembles propulsifs d'aéronefs.

Les émissions sonores engendrées par les turboréacteurs d'un avion sont particulièrement intenses au moment du décollage, alors que l'avion se trouve en général à proximité de zones habitées.

De nombreuses recherches portant sur la manière de réduire les émissions sonores engendrées par les turboréacteurs d'aéronefs ont été menées ces dernières années.

Ces recherches ont notamment conduit à la mise en place de panneaux d'atténuation acoustique dans la nacelle entourant le turboréacteur ainsi que dans certaines parties (telles que le carter de soufflante) du turboréacteur lui-même, en particulier dans les zones où les émissions sonores sont les plus importantes.

Ces panneaux fonctionnent en général selon le principe des résonateurs de Helmholtz, et comprennent à cet effet un ensemble de cavités prises en sandwich entre une peau pleine d'une part, et une peau perforée d'autre part.

La peau perforée est orientée vers la zone d'émission de bruit, de sorte que les ondes acoustiques peuvent pénétrer par les ouvertures de la peau perforée à l'intérieur des cavités. L'énergie acoustique est dissipée par effet visquo-thermique dans les trous de la peau perforée. La hauteur des cavités permet de choisir la bande de fréquence cible.

Outre leur fonction d'atténuation acoustique, ces panneaux assurent deux autres fonctions :
- une fonction aérodynamique : la peau perforée étant en contact avec les flux d'air et de gaz circulant à travers le turboréacteur et la nacelle, la peau perforée canalise le flux et doit perturber le moins possibles ces écoulements ;
- une fonction de reprise d'efforts : par l'intermédiaire du sandwich, le panneau d'atténuation acoustique est à même de reprendre certains des efforts subis par la nacelle.

La peau perforée d'un panneau d'atténuation acoustique est généralement obtenue par perçage d'une peau initialement pleine, au moyen de forets, le perçage étant réalisé selon une direction sensiblement perpendiculaire à la peau. Le motif de perçage (distance entre les trous, diamètre des trous) est optimisé afin que la peau perforée présente la résistance acoustique souhaitée (par exemple, une résistance acoustique proche de celle de l'air en amont de la soufflante du turboréacteur, et une résistance acoustique de l'ordre de deux à trois fois la résistance acoustique de l'air en aval de la soufflante) en présence d'un écoulement rasant. Une peau perforée est ainsi généralement caractérisée par son taux de surface ouverte (couramment dénommé « POA », pour « *percentage of open area* »). Ce taux, exprimé en pourcentage, est représentatif de la surface occupée par les ouvertures acoustiques rapportée à la surface totale de la peau acoustique. Pour un diamètre de perçage donné, plus ce taux est grand, plus grand est le nombre de perçages.

Or, les opérations de perçage sont complexes et coûteuses, et il existe un fort intérêt de limiter l'importance de ces opérations, notamment en diminuant autant que possible le taux de surface ouverte. En effet, un taux de surface ouverte de 14% peut représenter près de 55 000 trous par m², et on comprend donc que réduire ce taux présente de grands avantages en termes de durée et de coût de fabrication.

Le document EP 0 824 066 A1 divulgue un panneau de l'art antérieur.

La présente invention a pour objectif de pallier les différents inconvénients de l'état de la technique exposés ci-dessus.

Elle concerne à cet effet un panneau d'atténuation acoustique selon la revendication 1 pour un ensemble propulsif comportant une nacelle et un turboréacteur, le panneau comportant une âme alvéolaire disposée entre une peau interne et une peau externe, dite peau acoustique, la peau acoustique comportant une pluralité d'ouvertures acoustiques, les ouvertures acoustiques étant inclinées d'un angle d'inclinaison non nul par rapport à la direction normale à la peau acoustique, vers l'amont par rapport au sens d'écoulement du flux d'air ou de gaz auquel est destiné à être soumis le panneau en conditions normales de fonctionnement, c'est-à-dire vers l'amont de l'ensemble propulsif lorsque ledit panneau est monté dans un tel ensemble.

Ainsi, grâce à l'inclinaison des ouvertures acoustiques vers l'amont du flux auquel est soumis le panneau d'atténuation acoustique dans un ensemble propulsif en fonctionnement, on réduit substantiellement la résistance acoustique du panneau. Ainsi, à résistance acoustique égale, il est possible de diminuer fortement (par exemple de 30%) le taux de surface ouverte.

Dans l'invention, l'angle d'inclinaison, ou angle de perçage, des ouvertures acoustiques est compris entre 10° et 40°.

Dans une réalisation, les peaux interne et externe sont réalisées en matériaux composite à matrice organique.

Dans une réalisation, les ouvertures acoustiques sont réalisées par perçage mécanique ou par perçage laser.

L'invention concerne également un ensemble propulsif d'aéronef, ledit ensemble propulsif comprenant au moins un panneau tel que défini ci-dessus.

Dans une réalisation, l'ensemble propulsif comporte une nacelle et un turboréacteur d'aéronef, le turboréacteur comportant notamment une soufflante.

Dans une réalisation, l'ensemble propulsif comporte une pluralité de panneaux d'atténuation acoustique comportant des angles de perçage différents.

Dans une réalisation, l'angle de perçage des panneaux est décroissant de l'amont vers l'aval de la nacelle lorsque ceux-ci sont situés en amont de la soufflante du turboréacteur, l'angle de perçage des panneaux étant croissant si les panneaux sont situés en aval de la soufflante.

Dans une réalisation, le turboréacteur comporte un carter de soufflante entourant la soufflante, la surface interne du carter de soufflante comportant un ou plusieurs panneaux d'atténuation acoustique conformes à l'invention.

Dans une réalisation, le turboréacteur comporte un redresseur situé en aval de la soufflante, le redresseur comportant une pluralité d'aubes, la surface externe des aubes de redresseur comportant un ou plusieurs panneaux d'atténuation acoustique conforme à l'invention.

Dans une réalisation, le turboréacteur comporte, en aval de la soufflante, un carter délimitant la surface interne d'une veine secondaire et la surface externe d'une veine primaire, l'une et/ou l'autre de ces surfaces comportant un ou plusieurs panneaux d'atténuation acoustique conformes à l'invention.

D'autres caractéristiques et avantages de la présente invention apparaîtront à la lumière de la description qui suit, faite en référence aux dessins annexés, parmi lesquels :
- la figure 1 est une vue schématique en coupe longitudinale d'un ensemble propulsif, l'ensemble propulsif comportant une nacelle entourant un turboréacteur d'aéronef à double flux ;
- les figures 2a et 2b représentent un panneau d'atténuation acoustique de type connu ;
- la figure 3 représente un panneau d'atténuation acoustique conforme à l'invention ;
- la figure 4 représente un ensemble propulsif dont la nacelle est équipée de panneaux d'atténuation acoustique conformes à l'invention ;
- la figure 5 représente un ensemble propulsif dont le turboréacteur est équipé de panneaux d'atténuation acoustique conformes à l'invention ;
- la figure 6 représente un détail d'un panneau d'atténuation acoustique équipant le turboréacteur de la figure 5.

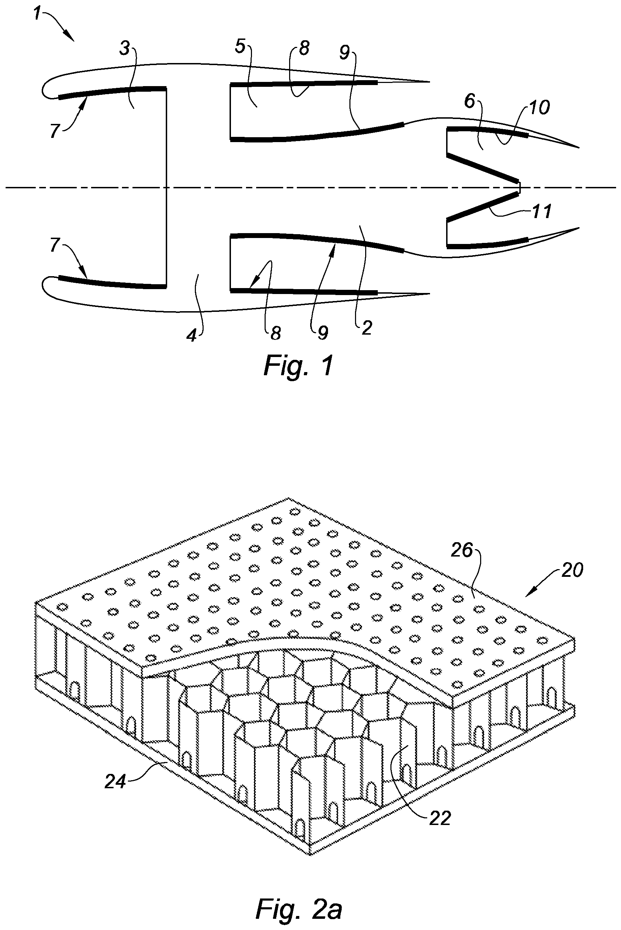

Sur la figure 1, on a représenté schématiquement un ensemble propulsif conventionnel. Cet ensemble propulsif comporte une nacelle 1 conventionnelle, équipant un turboréacteur 2 à double flux. La nacelle 1 comporte une entrée d'air 3, située en amont d'une soufflante 4 du turboréacteur 2. En aval de la soufflante 4, la nacelle définit une veine de flux froid, ou veine secondaire 5, et une veine de flux chaud, ou veine primaire 6.

Classiquement, l'entrée d'air 3 comporte un revêtement d'atténuation acoustique 7, formé par l'assemblage de panneaux d'atténuation acoustique.

La veine de flux froid 5 est délimitée par des parois radialement externe et interne, également revêtues au moins partiellement de panneaux d'atténuation acoustique 8 et 9 respectivement.

Enfin, la veine de flux chaud 6 est terminée par une tuyère primaire et un cône d'éjection des gaz, revêtus au moins partiellement de panneaux d'atténuation acoustique 10, 11.

Les emplacements des panneaux d'atténuation acoustique 7 à 11 correspondent aux parois de la nacelle au niveau desquelles se propage le bruit. La présence de ces panneaux d'atténuation acoustique permet ainsi de diminuer sensiblement le niveau sonore émis par l'ensemble propulsif de l'aéronef, notamment lors du décollage ou de l'atterrissage.

La figure 2a représente un panneau d'atténuation acoustique 20 conventionnel, comportant une âme alvéolaire 22 prise en sandwich entre une peau pleine 24, dite peau support, et une peau perforée 26, dite peau acoustique. L'âme alvéolaire comporte une pluralité d'alvéoles, dans l'exemple de section hexagonale (formant ainsi une structure dite en « nid d'abeilles »). Ces alvéoles forment les cavités acoustiques du panneau d'atténuation acoustique 20. L'âme alvéolaire est en général métallique tandis que la peau acoustique 26 et la peau support 24 sont couramment réalisées dans un matériau composite, notamment à base de fibres de carbone.

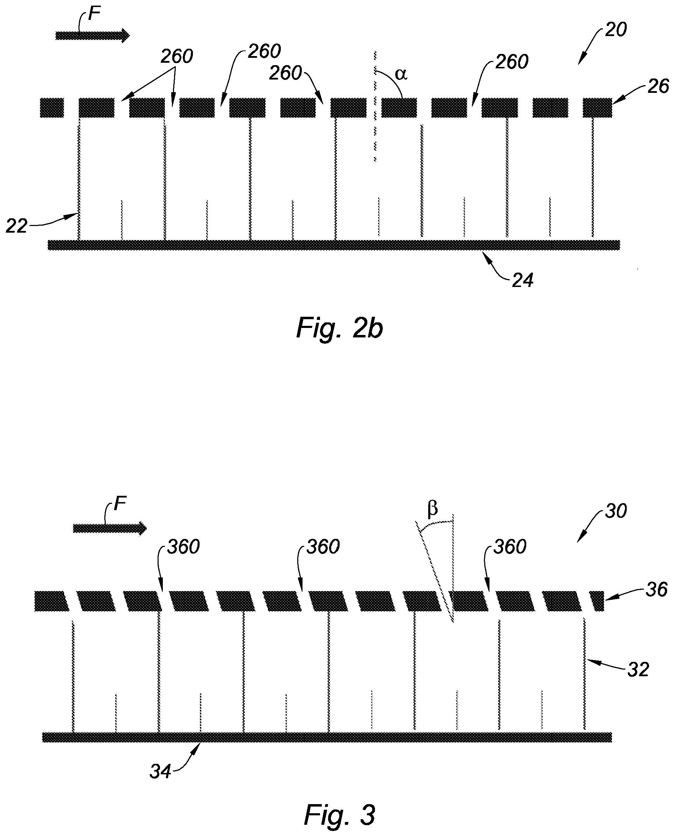

La figure 2b représente schématiquement le panneau d'atténuation acoustique 20 de la figure 2a vu en coupe. Sur la figure 2b, la flèche F indique le sens de l'écoulement du flux d'air (ou de gaz) auquel le panneau est soumis en conditions de fonctionnement normales, c'est-à-dire lorsqu'il est intégré à une nacelle de turboréacteur, et que le turboréacteur est en fonctionnement, notamment en vol. Comme mentionné plus haut, la peau acoustique 26 comporte une pluralité d'ouvertures acoustiques 260, obtenues par perçage de la peau selon une direction sensiblement perpendiculaire à celle-ci, et matérialisée par l'angle α, dont la valeur est de 90°.

La figure 3 représente un panneau d'atténuation acoustique 30 conforme à l'invention. Sur la figure 3, la flèche F indique également le sens de l'écoulement du flux d'air auquel le panneau est soumis en conditions de fonctionnement normales. En particulier, le flux d'air se dirige de l'amont vers l'aval de l'ensemble propulsif dans lequel le panneau est intégré. Le panneau 30 comporte une peau support 34 pleine et une peau acoustique 36 perforée. Entre la peau support 34 et la peau acoustique 36 est disposée une âme alvéolaire 32. La peau acoustique 36 comporte une pluralité d'ouvertures acoustiques 360.

Conformément à l'invention, les ouvertures acoustiques 360 sont inclinées vers l'amont par rapport au sens de circulation du flux d'air (ou de gaz) matérialisé par la flèche F. En d'autres termes, les ouvertures acoustiques 360 sont inclinées vers l'avant (ou vers l'amont) de l'ensemble propulsif lorsque le panneau est intégré à un tel ensemble. Les ouvertures acoustiques 360 sont obtenues par un perçage effectué selon une direction oblique relativement à la direction normale à la peau, matérialisée par l'angle de perçage β (ou angle d'inclinaison). La valeur de l'angle de perçage β est comprise entre 10° et 40°. Comme mentionné plus haut, l'inclinaison vers l'avant des ouvertures acoustiques 360 a pour effet de diminuer substantiellement la résistance acoustique du panneau d'atténuation acoustique en présence d'un écoulement rasant, donc lorsque l'ensemble propulsif auquel est intégré le panneau d'atténuation acoustique est en fonctionnement. Conséquemment, à résistance acoustique égale, il est possible de diminuer le taux de surface ouverte. A titre d'exemple, une peau acoustique percée obliquement avec un angle de perçage β de 20° et un taux de surface ouverte de 9% (comme dans l'exemple de la figure 3) aura un comportement acoustique équivalent à une peau acoustique percée perpendiculairement (comme dans l'exemple des figures 2a et 2b) avec un taux de surface ouverte de 14%.

La diminution du taux de surface ouverte qu'autorise l'invention permet donc de diminuer le temps et les coûts liés aux opérations de perçage.

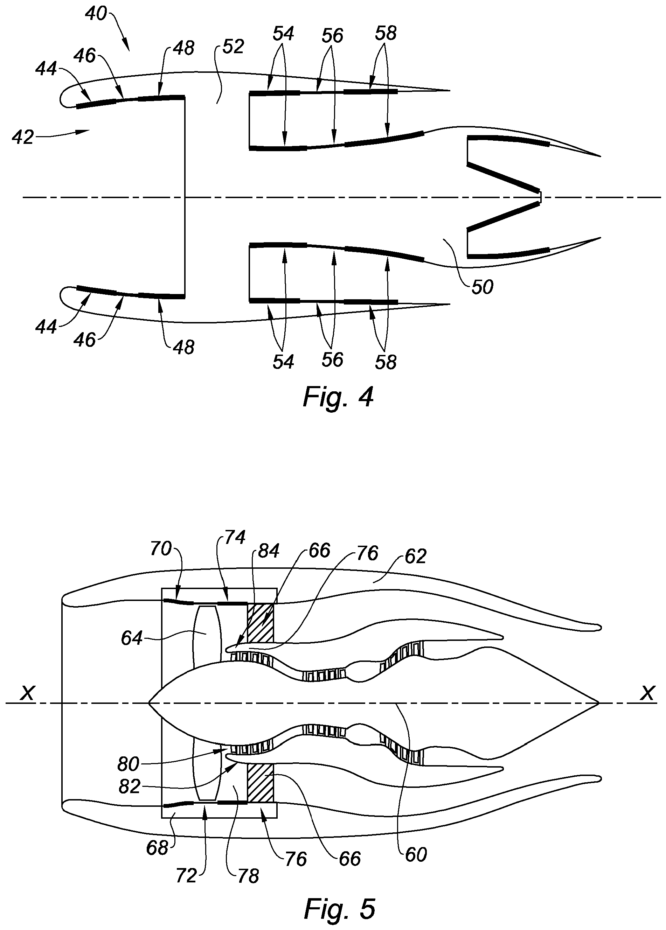

Comme montré sur la figure 4, il est en outre possible d'utiliser conjointement des panneaux d'atténuation acoustique conformes à l'invention, mais présentant des valeurs d'angle de perçage β différentes, et/ou de prévoir, pour un même panneau d'atténuation acoustique, des zones comportant des ouvertures d'inclinaisons différentes. La figure 4 représente ainsi un ensemble propulsif comportant un turboréacteur 50 logé dans une nacelle 40, dont l'entrée d'air 42 est pourvue d'un revêtement acoustique. Ce revêtement comprend des panneaux d'atténuation acoustique répartis, de l'amont vers l'aval de la nacelle 40, en plusieurs zones (dans l'exemple trois zones) présentant un angle de perçage acoustique différent. Une première zone 44 comporte des panneaux d'atténuation acoustique présentant l'angle de perçage le plus élevé du revêtement, par exemple de 20°. Une deuxième zone 46, située en aval de la première zone 44, comporte des panneaux d'atténuation acoustique présentant un angle de perçage moins élevé que pour la première zone 44, par exemple de 10°. Enfin, une troisième zone 48, située en aval de la deuxième zone 46, comporte des panneaux d'atténuation acoustique présentant un angle de perçage moins élevé que pour la deuxième zone, et notamment un angle de perçage nul. En faisant varier ainsi l'angle de manière décroissante de l'amont vers l'aval, on réalise un traitement acoustique dont la résistance acoustique varie le long de l'axe longitudinal de l'ensemble propulsif, ce qui rend la résistance acoustique mieux adaptée à la vitesse d'écoulement et au niveau sonore local. Faire varier l'angle de perçage permet d'obtenir, avec un taux de surface ouverte constant, un comportement acoustique équivalent à un panneau d'atténuation acoustique conventionnel dont le taux de surface ouverte serait variable.

Dans l'exemple décrit ci-dessus, on notera que les zones 44, 46, 48 sont situées en amont de la soufflante 52 du turboréacteur 50 logé dans la nacelle 40. Dans ce cas, on prévoira que l'angle de perçage est décroissant de l'amont vers l'aval de la nacelle. En revanche, pour des zones situées en aval de la soufflante 52, on prévoira une progression inverse : l'angle de perçage augmentera de l'amont vers l'aval de l'ensemble propulsif. La figure 4 montre ainsi un deuxième revêtement acoustique disposé en aval de la soufflante 52. Une première zone 54 comporte des panneaux d'atténuation acoustique présentant l'angle de perçage le moins élevé de ce deuxième revêtement, et notamment un angle de perçage nul. Une deuxième zone 56, située en aval de la première zone 54, comporte des panneaux d'atténuation acoustique présentant un angle de perçage plus élevé que pour la première zone 54, par exemple de 10°. Enfin, une troisième zone 58, située en aval de la deuxième zone 56, comporte des panneaux d'atténuation acoustique présentant l'angle de perçage le plus élevé du revêtement, par exemple un angle de perçage de 20°.

La figure 5 montre un exemple d'ensemble propulsif comportant des panneaux d'atténuation acoustique conforme à l'invention disposés dans certaines parties du turboréacteur. Ainsi, l'ensemble propulsif de la figure 5 comporte un turboréacteur 60 d'axe longitudinal XX, logé dans une nacelle 62. Le turboréacteur 60 comporte une soufflante 64 et, en aval de celle-ci, un redresseur comportant des aubes 66. La soufflante 64 et le redresseur sont entourés par un carter 68 de soufflante. Des panneaux d'atténuation acoustique conformes à l'invention sont disposés notamment sur la surface interne du carter 68 de soufflante, dans les zones référencées 70, 72, 74, 76, ces zones étant situées respectivement en aval de la soufflante 64, en regard des aubes de la soufflante 64, entre la soufflante 64 et le redresseur, et en regard des aubes 66 du redresseur. Les aubes 66 du redresseur sont également équipées de panneaux d'atténuation acoustique conformes à l'invention. Le turboréacteur 60 comporte, en aval de la soufflante 64, un carter 76 délimitant la surface interne 82 de la veine secondaire 78 et la surface externe 84 de la veine primaire 80, les zones 82 et 84 comportant également un ou plusieurs panneaux d'atténuation acoustique conformes à l'invention.

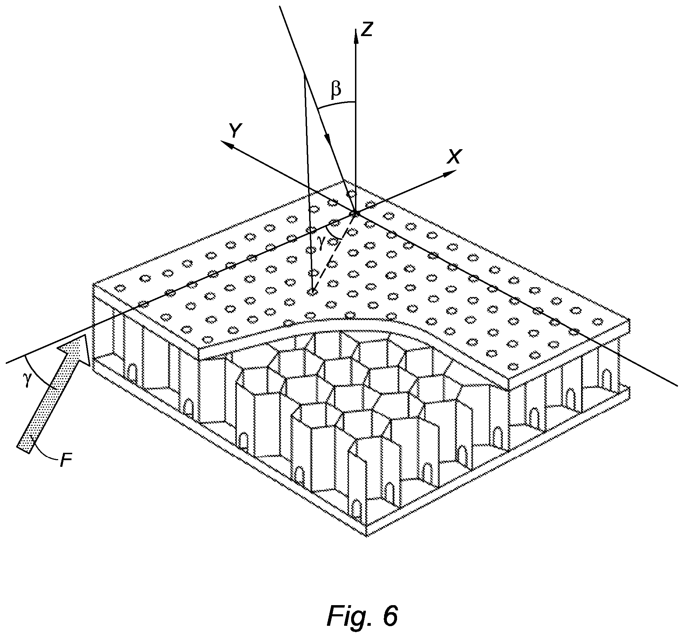

Dans la zone située entre la soufflante 64 et les aubes 66 du redresseur, l'écoulement possède un angle de giration γ. Afin de mieux adapter le traitement acoustique dans cette zone, comme représenté sur la figure 6, on pourra, en plus de l'inclinaison des ouvertures acoustiques vers l'amont de l'ensemble propulsif de l'angle de perçage β, introduire une inclinaison d'angle γ, pour compenser le mouvement de giration du flux d'air, de sorte que l'axe des ouvertures acoustiques soit localement toujours orienté dans la direction de l'écoulement.

Bien entendu, la présente invention n'est nullement limitée aux modes de réalisation décrits et représentés.

## Revendications

1. Panneau (30) d'atténuation acoustique pour un ensemble propulsif comportant une nacelle et un turboréacteur, le panneau (30) comportant une âme alvéolaire (32) disposée entre une peau interne (34) et une peau externe (36), dite peau acoustique, la peau acoustique comportant une pluralité d'ouvertures acoustiques (360), les ouvertures acoustiques (360) étant inclinées, d'un angle d'inclinaison (β) non nul par rapport à la direction normale à la peau acoustique, vers l'amont par rapport au sens d'écoulement du flux d'air ou de gaz auquel est destiné à être soumis le panneau (30) en conditions normales de fonctionnement, c'est-à-dire vers l'amont de l'ensemble propulsif lorsque ledit panneau est monté dans un tel ensemble, **caractérisé en ce que** l'angle d'inclinaison (β), ou angle de perçage (β), est compris entre 10° et 40°.

2. Panneau (30) selon la revendication précédente, dans lequel les peaux interne (34) et externe (36) sont réalisées en matériaux composite à matrice organique.

3. Panneau (30) selon la revendication 1 ou 2, dans lequel les ouvertures acoustiques (360) sont réalisées par perçage mécanique ou par perçage laser.

4. Ensemble propulsif d'aéronef, comportant une nacelle et un turboréacteur d'aéronef, le turboréacteur comportant notamment une soufflante, l'ensemble propulsif étant **caractérisé en ce qu'**il comporte au moins un panneau (30) d'atténuation acoustique conforme à l'une des revendications précédentes.

5. Ensemble propulsif d'aéronef selon la revendication précédente, comportant une pluralité de panneaux (30) d'atténuation acoustique comportant des angles de perçage (β) différents.

6. Ensemble propulsif d'aéronef selon la revendication précédente, dans laquelle l'angle de perçage (β) des panneaux (30) est décroissant de l'amont vers l'aval de la nacelle lorsque ceux-ci sont situés en amont de la soufflante du turboréacteur, l'angle de perçage (β) des panneaux (30) étant croissant si les panneaux sont situés en aval de la soufflante.

7. Ensemble propulsif d'aéronef selon l'une des revendications 4 à 6, dans lequel le turboréacteur comporte un carter de soufflante entourant la soufflante, **caractérisé en ce que** la surface interne du carter de soufflante comporte un ou plusieurs panneaux (30) d'atténuation acoustique.

8. Ensemble propulsif d'aéronef selon l'une des revendications 4 à 6, dans lequel le turboréacteur comporte un redresseur situé en aval de la soufflante, le redresseur comportant une pluralité d'aubes, l'ensemble propulsif étant **caractérisé en ce que** la surface externe des aubes de redresseur comporte un ou plusieurs panneaux (30) d'atténuation acoustique.

9. Ensemble propulsif d'aéronef selon l'une des revendications 4 à 8, dans lequel le turboréacteur comporte, en aval de la soufflante, un carter délimitant la surface interne d'une veine secondaire et la surface externe d'une veine primaire, l'une et/ou l'autre de ces surfaces comportant un panneau (30) d'atténuation acoustique.

## Patentansprüche

1. Schalldämmungsplatte (30) für eine Antriebseinheit, die eine Gondel und ein Turbotriebwerk beinhaltet, wobei die Platte (30) einen Wabenkern (32) beinhaltet, der zwischen einer Innenhaut (34) und einer Außenhaut (36), Schallhaut genannt, angeordnet ist, wobei die Schallhaut eine Vielzahl von Schallöffnungen (360) beinhaltet, wobei die Schallöffnungen (360) um einen Neigungswinkel (ß) ungleich null in Bezug auf die zur Schallhaut normale Richtung, stromaufwärts in Bezug auf die Strömungsrichtung des Luft- oder Gasstroms geneigt sind, dem die Platte (30) unter normalen Betriebsbedingungen bestimmt ist, ausgesetzt zu sein, das heißt nach stromaufwärts der Antriebseinheit, wenn die Platte in einer solchen Einheit angebracht ist, **dadurch gekennzeichnet, dass** der Neigungswinkel (ß) oder Bohrungswinkel (ß) zwischen 10° und 40° enthalten ist.

2. Platte (30) nach dem vorstehenden Anspruch, wobei die Innenhaut (34) und Außenhaut (36) aus einem Verbundmaterial mit organischer Matrix gefertigt sind.

3. Platte (30) nach Anspruch 1 oder 2, wobei die Schallöffnungen (360) durch mechanisches Bohren oder durch Laserbohren gefertigt sind.

4. Antriebseinheit eines Luftfahrzeugs, die eine Gondel und ein Turbotriebwerk eines Luftfahrzeugs beinhaltet, wobei das Turbotriebwerk insbesondere ein Gebläse beinhaltet, wobei die Antriebseinheit **dadurch gekennzeichnet ist, dass** sie mindestens eine Schalldämmungsplatte (30) nach einem der vorstehenden Ansprüche beinhaltet.

5. Antriebseinheit eines Luftfahrzeugs nach dem vorstehenden Anspruch, die eine Vielzahl von Schalldämmungsplatten (30) beinhaltet, die unterschiedliche Bohrwinkel (ß) beinhalten.

6. Antriebseinheit eines Luftfahrzeugs nach dem vorstehenden Anspruch, wobei der Bohrungswinkel (ß) der Platten (30) von stromaufwärts nach stromabwärts der Gondel abnehmend ist, wenn sich diese stromaufwärts des Gebläses des Turbotriebwerks befinden, wobei der Bohrungswinkel (ß) der Platten (30) ansteigend ist, wenn sich die Platten stromabwärts des Gebläses befinden.

7. Antriebseinheit eines Luftfahrzeugs nach einem der Ansprüche 4 bis 6, wobei das Turbotriebwerk ein Gebläsegehäuse beinhaltet, welches das Gebläse umgibt, **dadurch gekennzeichnet, dass** die Innenoberfläche des Gebläsegehäuses eine oder mehrere Schalldämmungsplatten (30) beinhaltet.

8. Antriebseinheit eines Luftfahrzeugs nach einem der Ansprüche 4 bis 6, wobei das Turbotriebwerk einen Leitapparat beinhaltet, der stromabwärts des Gebläses gelegen ist, wobei der Leitapparat eine Vielzahl von Schaufeln beinhaltet, wobei die Antriebseinheit **dadurch gekennzeichnet ist, dass** die Außenoberfläche der Leitapparatschaufeln ein oder mehrere Schalldämmungsplatten (30) beinhaltet.

9. Antriebseinheit eines Luftfahrzeugs nach einem der Ansprüche 4 bis 8, wobei das Turbotriebwerk stromabwärts des Gebläses ein Gehäuse beinhaltet, das die Innenoberfläche eines Sekundärstroms und die Außenoberfläche eines Primärstroms begrenzt, wobei die eine und/oder die andere dieser Oberflächen eine Schalldämmungsplatte (30) beinhaltet.

## Claims

1. An acoustic attenuation panel (30) for a propulsion unit comprising a nacelle and a turbojet engine, the panel (30) comprising a cellular core (32) disposed between an inner skin (34) and an outer skin (36), called acoustic skin, the acoustic skin comprising a plurality of acoustic apertures (360), the acoustic apertures (360) being inclined, at a non-zero inclination angle (β) relative to the direction normal to the acoustic skin, upstream with respect to the flow direction of the air or gas flow to which the panel (30) is intended to be subjected under normal operating conditions, that is to say upstream of the propulsion unit when said panel is mounted in such a unit, **characterized in that** the inclination angle (β), or drilling angle (β), is comprised between 10° and 40°.

2. The panel (30) according to the preceding claim, wherein the inner (34) and outer (36) skins are made of organic matrix composite materials.

3. The panel (30) according to claim 1 or 2, wherein the acoustic apertures (360) are made by mechanical drilling or by laser drilling.

4. An aircraft propulsion unit, comprising a nacelle and an aircraft turbojet engine, the turbojet engine comprising in particular a fan, the propulsion unit being **characterized in that** it comprises at least one acoustic attenuation panel (30) in accordance with any of the preceding claims.

5. The aircraft propulsion unit according to the preceding claim, comprising a plurality of acoustic attenuation panels (30) comprising different drilling angles (β).

6. The aircraft propulsion unit according to the preceding claim, wherein the drilling angle (β) of the panels (30) is decreasing from upstream to downstream of the nacelle when the panels are located upstream of the fan of the turbojet engine, the drilling angle (β) of the panels (30) being increasing if the panels are located downstream of the fan.

7. The aircraft propulsion unit according to any of claims 4 to 6, wherein the turbojet engine comprises a fan casing surrounding the fan, **characterized in that** the inner surface of the fan casing comprises one or several acoustic attenuation panel(s) (30).

8. The aircraft propulsion unit according to any of claims 4 to 6, wherein the turbojet engine comprises a straightener located downstream of the fan, the straightener comprising a plurality of blades, the propulsion unit being **characterized in that** the outer surface of the straightener blades comprises one or several acoustic attenuation panel(s) (30).

9. The aircraft propulsion unit according to any of claims 4 to 8, wherein the turbojet engine comprises, downstream of the fan, a casing delimiting the inner surface of a secondary flow path and the outer surface of a primary flow path, one or both of these surfaces comprising an acoustic attenuation panel (30).
